# EUROPEAN PATENT APPLICATION

(11) **EP 2 755 396 A1**
(43) Date of publication of application: **16.07.2014**
(21) Application number: 12793042.8
(22) Date of filing: 20.04.2012
(51) Int. Cl.: H04N 21/238

(54) **METHOD, DEVICE AND SYSTEM FOR ORDERING ON-DEMAND PROGRAM**

(30) Priority: 07.09.2011 CN 201110264032
(71) Applicant: Huawei Technologies Co., Ltd, Shenzhen, Guangdong 518129 (CN)
(72) Inventor: HU, Zifu, Shenzhen Guangdong 518129 (CN)
(74) Representative: Epping - Hermann - Fischer
(86) International application number: PCT/CN2012/074408
(87) International publication number: WO 2012/163195

(57) **Abstract**

Embodiments of the present invention relate to the technical field of television, and disclose a method, a device and a system for ordering a pay program. The invention aims to play an ordered program automatically once a user's payment is completed. The method includes: sending an order request to an EPG server; receiving an amount should be recharged sent by the EPG server; sending a redirection request to the payment platform, where the redirection request carries an HTTP URL provided by the EPG server, and the HTTP URL is saved by the payment platform; receiving a redirection response sent by the payment platform, where the redirection response carries the HTTP URL; redirecting to the order processing page of the pay program according to the HTTP URL; obtaining an RTSP URL from the order processing page; and requesting a CDN to play the pay program according to the RTSP URL. The present invention is primarily used in the field of ordering a pay program.

## Description

This application claims priority to Chinese Patent Application 201110264032.9, filed on September 07, 2011, entitled "METHOD, DEVICE AND SYSTEM FOR ORDERING PAY PROGRAM", which is hereby incorporated herein by reference in its entirety.

### TECHNICAL FIELD

The present invention relates to the technical field of television and, more particularly, to a method, a device and a system for ordering a pay program.

### BACKGROUND

A digital television is a television equipment which uses digital signals to process, transfer, transmit and receive television signals, receives a compressed digital signal through a set-top box (Set-top Box, STB) and decompresses and converts the digital signal to an image signal which can be displayed by the digital television. The digital television technology provides an interactive function, and endows new functions, such as video-on-demand, on-line shopping, long-distance teaching and long-distance medical treatment with the television, so that people can obtain various network services according to their demands.

Currently, the digital television service mainly adopts a prepaid payment method, that is, a user can order a pay program only when the user's account balance is greater than this ordering fee. This kind of payment method can prevent the user from defaulting payment, and guarantee the operator's legal benefits to the most extend.

According to the existing technology for playing the pay program, when the user orders the pay program, if the user's account balance is not enough to pay for this on-demand program, then the system notifies the user to pay, such that the user performs the payment by inputting a bank card account number and a password through the payment input terminal connected to the set-top box and orders this on-demand program again for browsing after the payment has been completed.

During implementing the above process of ordering the pay program, the inventor find that the prior art at least has the problems as follows: after the payment has been completed, the user cannot directly watch the ordered pay program but needs to order the pay program again in an electronic program guide menu (Electronic Program Guide, EPG) server, thus causing inconvenience to the user.

### SUMMARY

Embodiments of the present invention provide a method, a device and a system for ordering a pay program, which can play an ordered pay program automatically once after the user completes the payment, and thus brings convenience for ordering the pay program.

To achieve the above object, embodiments of the present invention provide technical solutions as follows:

A method for ordering a pay program, comprising:
sending an order request to an electronic program guide (EPG) server, so that the EPG server sends a chargeback request to an operational support system according to the order request;
receiving an amount should be recharged sent by the EPG server when a chargeback result of the operational support system is that a balance is insufficient;
sending a redirection request to a payment platform after sending a recharging request to the EPG server, wherein, the redirection request carries a hypertext transfer protocol uniform resource locator (HTTP URL) provided by the EPG server, the HTTP URL is saved by the payment platform, and the HTTP URL is an address of an order processing page of the pay program;
receiving a redirection response sent by the payment platform after recharging is completed, wherein the redirection response carries the HTTP URL, and redirecting to the order processing page of the pay program according to the HTTP URL; and
obtaining a real time streaming protocol uniform resource locator (RTSP URL) from the order processing page of the pay program after the operational support system completes chargeback, and requesting a content delivery network (CDN) to play the pay program according to the RTSP URL.

A method for ordering a pay program, comprising:
receiving a redirection request sent by a user terminal, wherein the redirection request carries an HTTP URL provided by an EPG server, and the HTTP URL is an address of an order processing page of the pay program;
saving the HTTP URL;
providing the HTTP URL to the user terminal after recharging is completed, wherein the HTTP URL is carried in a redirection response.

A user terminal, comprising:
a first sending unit, configured to send an order request to an EPG server, so that the EPG server sends a chargeback request to an operational support system according to the order request;
a first receiving unit, configured to receive an amount should be recharged sent by the EPG server when a chargeback result of the operational support system is that a balance is insufficient;
a redirection unit, configured to send a redirection request to a payment platform after sending a recharging request to the EPG server, wherein, the redirection request carries an HTTP URL provided by the EPG server, the HTTP URL is saved by the payment platform, and the HTTP URL is an address of an order processing page of the pay program;
a second receiving unit, configured to receive a redirection response sent by the payment platform after recharging is completed, wherein the redirection response carries the HTTP URL, and redirect to the order processing page of the pay program according to the HTTP URL;
a first obtaining unit, configured to obtain an RTSP URL from the order processing page of the pay program after the operational support system completes chargeback, and requesting a CDN to play the pay program according to the RTSP URL.

A payment platform, comprising:
a receiving unit, configured to receive a redirection request sent by a user terminal, wherein the redirection request carries an HTTP URL provided by an EPG server, and the HTTP URL is an address of an order processing page of the pay program;
a saving unit, configured to save the HTTP URL;
a redirection unit, configured to provide the HTTP URL to the user terminal after recharging is completed, wherein the HTTP URL is carried in a redirection response.
A system for ordering a pay program, comprising: a user terminal, an EPG server, a payment platform and an operational support system, wherein:
the user terminal is configured to send an order request to the EPG server, so that the EPG server sends a chargeback request to the operational support system according to the order request, receive an amount should be recharged sent by the EPG server when a chargeback result of the operational support system is that a balance is insufficient, send a redirection request to the payment platform after sending a recharging request to the EPG server, wherein, the redirection request carries an HTTP URL provided by the EPG server, the HTTP URL is saved by the payment platform, and the HTTP URL is an address of an order processing page of the pay program, receive a redirection response sent by the payment platform after recharging is completed, wherein the redirection response carries the HTTP URL, and redirect to the order processing page of the pay program according to the HTTP URL, and obtain an RTSP URL from the order processing page of the pay program after the operational support system completes chargeback, and request a CDN to play the pay program according to the RTSP URL;
the EPG server is configured to receive the order request sent by the user terminal, send a chargeback request to the operational support system according to the order request, send the amount should be recharged to the user terminal when the chargeback result of the operational support system is that the balance is insufficient, receive the recharging request sent by the user terminal, and provide the HTTP URL to the user terminal when the user terminal sends the redirection response to the payment platform;
the payment platform is configured to receive the redirection request sent by the user terminal, wherein the redirection request carries the HTTP URL provided by the EPG server, and the HTTP URL is the address of the order processing page of the pay program, save the HTTP URL, and provide the HTTP URL to the user terminal after recharging is completed, wherein the HTTP URL is carried in the redirection response;
the operational support system is configured to receive the chargeback request from the EPG server, synthetically price the pay program according to the chargeback request, perform a chargeback process on the basis of a price determined by the synthetic pricing, obtain the chargeback result, and send the chargeback result to the EPG server to perform the chargeback for the pay program.

According to the method, the device, and the system for ordering a pay program provided by embodiments of the present invention, when the user sends a recharging request to the payment platform, the STB sends a redirection request carrying an HTTP URL provided by the EPG server to the payment platform, and the payment platform saves the HTTP URL temporarily. After the operational support system completes the chargeback for the pay program, the payment platform returns the HTTP URL carried in a redirection response to the STB, so that the STB redirects to the order processing page of the pay program according to the HTTP URL and obtains the RTSP URL which is used for playing the pay program from the page. Therefore, the problem in the prior art that the operational support system further requires the user to order the pay program again after completing the chargeback for the pay program is avoided, thereby saving the user's operating steps and enabling the user to order the pay program more conveniently.

### BRIEF DESCRIPTION OF THE DRAWINGS

To make the technical solution of embodiments of the present invention or the prior art more clearly, the accompanying drawings used in description of embodiments of the present invention or the prior art are briefly described hereunder. Apparently, the described accompanying drawings are merely some embodiments of the present invention. For persons skilled in the art, other drawings may be obtained based on these drawings without any creative efforts.
FIG. 1 is a flow chart of a method for ordering a pay program according to Embodiment 1 of the present invention;
FIG. 2 is a flow chart of a method for ordering a pay program according to Embodiment 2 of the present invention;
FIG. 3 is a flow chart of a method for ordering a pay program according to Embodiment 3 of the present invention;
FIG. 4 is a schematic structural diagram of a STB according to Embodiment 4 of the present invention;
FIG. 5 is a schematic structural diagram of a STB according to Embodiment 4 of the present invention;
FIG. 6 is a schematic structural diagram of a payment platform according to Embodiment 4 of the present invention; and
FIG. 7 is a schematic structural diagram of a system for ordering a pay program according to Embodiment 5 of the present invention.

### DESCRIPTION OF EMBODIMENTS

The technical solutions in embodiments of the present invention are hereinafter described clearly and completely with reference to the accompanying drawings in embodiments of the present invention. Obviously, the described embodiments are only a part of embodiments of the present invention, rather than all embodiments of the present invention. All other embodiments obtained by persons skilled in the art based on embodiments of the present invention without any creative efforts shall fall within the protection scope of the present invention.

In embodiments of the present invention, a STB is taken as an example of a user terminal, however, the user terminal in practice is not limited to this.

### Embodiment 1

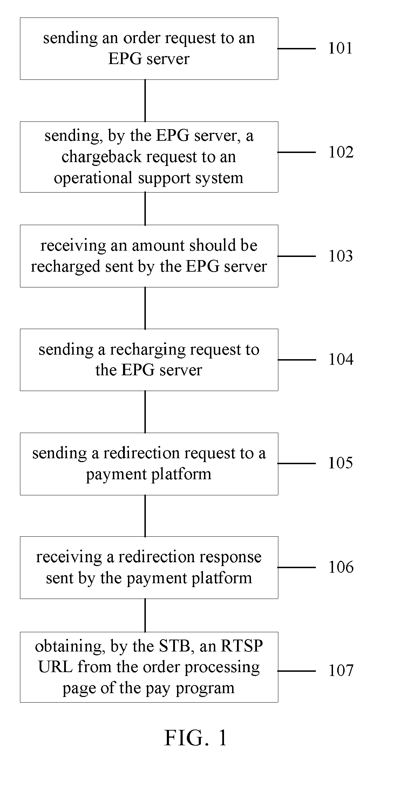

This embodiment of the present invention provides a method for ordering a pay program, as shown in FIG. 1, the method includes the following steps of:
101, sending an order request to an EPG server.

The order request is a certain pay program ordered by a user.
102, sending, by the EPG server, a chargeback request to an operational support system.
103, receiving an amount should be recharged sent by the EPG server when a chargeback result of the operational support system is that a balance is insufficient.

Embodiments of the present invention are described by taking a pay-per-view program as an example, however, in practical applications, embodiments of the present invention are also applicable to a yearly payment, and in this case, when the balance in the user's account is insufficient to pay for this pay program, the operational support system sends the amount should be recharged to the STB.

In this embodiment, a pay-per-view payment method is adopted, and the amount should be recharged is at least a difference formed by subtracting the balance in the user's account from the price of the pay program ordered by the user.
104, sending a recharging request to the EPG server.
105, after sending the recharging request to the EPG server, sending a redirection request to a payment platform, where the redirection request carries a hypertext transfer protocol uniform resource locator (HyperText Transfer Protocol Uniform Resource Locator, HTTP URL) provided by the EPG server.

The HTTP URL is saved by the payment platform, and the HTTP URL is an address of an order processing page of the pay program.

106, receiving a redirection response sent by the payment platform after recharging is completed, wherein the redirection response carries the HTTP URL, and redirecting to the order processing page of the pay program according to the HTTP URL.

107, obtaining, by the STB, a real time streaming protocol uniform resource locator (Real Time Streaming Protocol Uniform Resource Locator, RTSP URL) from the order processing page of the pay program after the operational support system completes chargeback.

The STB requests a content delivery network (Content Delivery Network, CDN) to play the pay program ordered by the user according to the received RTSP URL.

In the method for ordering a pay program provided by embodiments of the present invention, when the user sends a recharging request to the payment platform, the STB sends a redirection request carrying an HTTP URL provided by the EPG server to the payment platform, and the payment platform saves the HTTP URL temporarily. After the operational support system completes the chargeback for the pay program, the payment platform returns the HTTP URL carried in a redirection response to the STB, so that the STB redirects to the order processing page of the pay program according to the HTTP URL and obtains the RTSP URL which is used for playing the pay program from the page. Therefore, the problem in the prior art that the operational support system further requires the user to order the pay program again after completing the chargeback for the pay program is avoided, thereby saving the user's operating steps and enabling the user to order the pay program more conveniently.

### Embodiment 2

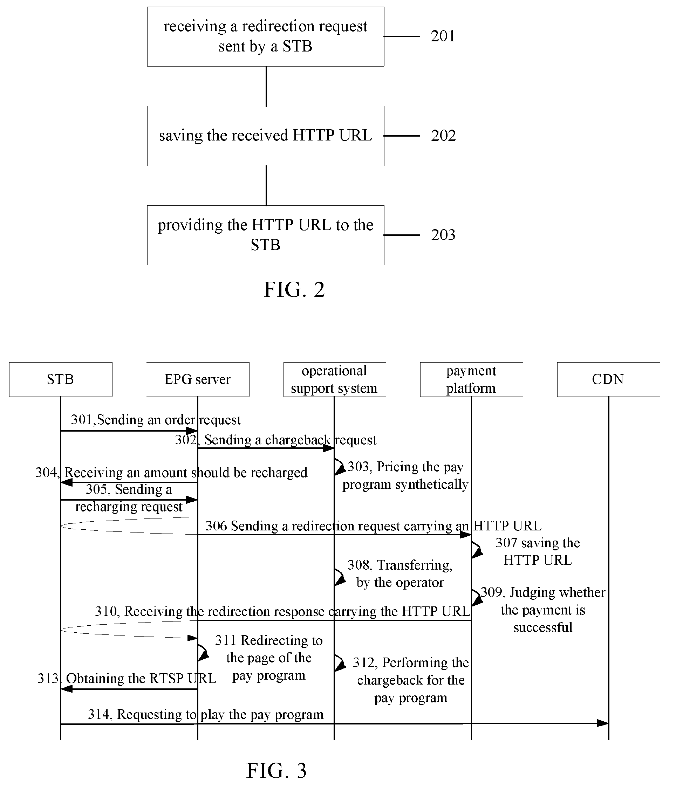

This embodiment provides a method for ordering a pay program, as shown in FIG. 2, the method includes the following steps of:
201, receiving a redirection request sent by a STB, where the redirection request carries an HTTP URL provided by an EPG server.

The HTTP URL is an address of an order processing page of the pay program.
202, saving the received HTTP URL.
203, providing the HTTP URL in step 201 to the STB after recharging is completed, where the HTTP URL is carried in a redirection response.

In the method for ordering a pay program provided by embodiments of the present invention, when the user sends a recharging request to the payment platform, the STB sends a redirection request carrying an HTTP URL provided by the EPG server to the payment platform, and the payment platform saves the HTTP URL temporarily. After the operational support system completes the chargeback for the pay program, the payment platform returns the HTTP URL carried in a redirection response to the STB, so that the STB redirects to the order processing page of the pay program according to the HTTP URL and obtains the RTSP URL which is used for playing the pay program from the page. Therefore, the problem in the prior art that the operational support system further requires the user to order the pay program again after completing the chargeback for the pay program is avoided, thereby saving the user's operating steps and enabling the user to order the pay program more conveniently.

### Embodiment 3

This embodiment of the present invention provides a method for ordering a pay program, as shown in FIG. 3, the method includes the following steps of:
301, sending an order request to an EPG server.

The order request is a certain pay program ordered by a user.
302, sending, by the EPG server, a chargeback request to an operational support system according to the order request.

The payment request includes: a user's service account, a pay program number and a message transaction, where the user's service account is an STB account used by the user, the pay program number is the serial number of the pay program ordered by the user in the EPG, and the message transaction is used to carry other auxiliary information.
303, pricing, by the operational support system, the pay program synthetically.

The operational support system synthetically prices the pay program according to a product price of the pay program ordered by the user, a consumption history of the user, a type of a package ordered by the user and a preferential policy of an operator, and sends the payment result to the EPG server according to the pricing and the balance in the user's account.
304, receiving an amount should be recharged sent by the EPG server when a chargeback result of the operational support system is that a balance is insufficient.

The parameters for the amount should be recharged received by the STB includes: prompt information, ordering fee and the amount should be charged, where:
the prompt information is used to prompt the user whether needs to recharge, the ordering fee is a price after the operational support system synthetically pricing the pay program, and the amount should be recharged is a difference formed by subtracting the balance in the user's account from the price of the pay program ordered by the user.

Embodiments of the present invention are described by taking a pay-per-view program as an example, however, in practical applications, embodiments of the present invention are also applicable to a yearly payment, and in this case, when the balance in the user's account is insufficient to pay for this pay program, the operational support system sends the amount should be recharged to the STB.

In this embodiment, a pay-per-view payment method is adopted, and the amount should be recharged is at least a difference formed by subtracting the balance in the user's account from the price of the pay program ordered by the user.
305, sending a recharging request to the EPG server.
306, after sending the recharging request to the EPG server, sending a redirection request to the payment platform, where the redirection request carries an HTTP URL provided by the EPG server.

The HTTP URL is an address of an order processing page of the pay program ordered by the user. Meanwhile, the user's bank card account number and the password provided by the user are sent to the payment platform such that the operator can transfer the user's payment.

A user's service account and a pay program name are sent together with the HTTP URL.
307, receiving, by the payment platform, the HTTP URL sent by the STB and saving the HTTP URL.
308, transferring, by the operator, the user's payment according to the bank card account number and the password provided by the user.

The amount should be recharged in step 304 sent to the STB is at least a difference between the price of the pay program ordered by the user and the balance in the user's account, but the user can select to pay an amount more than the amount should be charged to save it in the user's account on the operational support system for the chargeback in the subsequent ordering.
309, judging, by the payment platform, whether the user's payment is successful, if yes, then the payment platform recharges the user's payment to the user's account in the operational support system.

When the operator receives the transfer from the banking system, the judging result is that the user's payment is successful; when the operator doesn't receive the transfer from the banking system, the judging result is that the user's payment is failed.
310, receiving a redirection response sent by the payment platform after the recharging is completed, where the redirection response carries the HTTP URL.
311, after receiving the HTTP URL, the STB redirects to the order processing page of the pay program according to the HTTP URL.
312, performing, by the operational support system, the chargeback for the pay program.

The quota of the chargeback is the amount should be charged which is sent to the STB in step 304, that is, a difference formed by subtracting the balance in the user's account from the price of the pay program.
313, obtaining, by the STB, the RTSP URL from the order processing page of the pay program, after the operational support system completes the chargeback.
314, requesting, by the STB, a CDN to play the pay program ordered by the user according to the RTSP URL.

In the method for ordering a pay program provided by embodiments of the present invention, when the user sends a recharging request to the payment platform, the STB sends a redirection request carrying an HTTP URL provided by the EPG server to the payment platform, and the payment platform saves the HTTP URL temporarily. After the operational support system completes the chargeback for the pay program, the payment platform returns the HTTP URL carried in a redirection response to the STB, so that the STB redirects to the order processing page of the pay program according to the HTTP URL and obtains the RTSP URL which is used for playing the pay program from the page. Therefore, the problem in the prior art that the operational support system further requires the user to order the pay program again after completing the chargeback for the pay program is avoided, thereby saving the user's operating steps and enabling the user to order the pay program more conveniently.

Furthermore, according to the method for ordering a pay program provided by embodiments of the present invention, when pricing the pay program, the pay program is priced synthetically according to the product price of the pay program, the consumption history of the user, the type of the package ordered by the user and the preferential policy of the operator, therefore, compared to pricing the pay program only depending on the product price of the pay program in the prior art, the refined operation of the product is realized.

### Embodiment 4

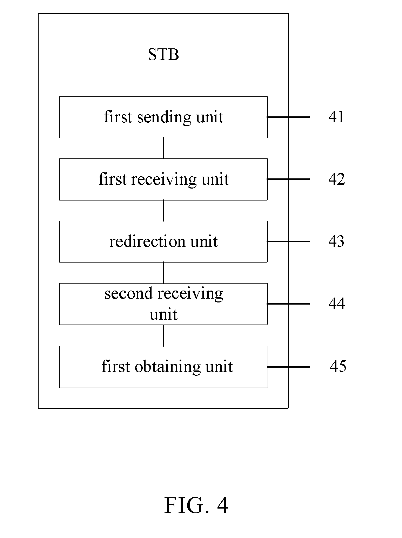

This embodiment of the present invention provides a STB, as shown in FIG. 4, the STB includes:
a first sending unit 41, a first receiving unit 42, a redirection unit 43, a second receiving unit 44 and a first obtaining unit 45, where:
the first sending unit 41 is configured to send an order request to an EPG server, so that the EPG server sends a chargeback request to an operational support system according to the order request.

The payment request includes: a user's service account, a pay program number and a message transaction, where the user's service account is the STB account used by the user, the pay program number is the serial number of the user's pay program ordered by the user in the EPG, and the message transaction is used to carry other auxiliary information.

The first receiving unit 42 is configured to receive an amount should be recharged sent by the EPG server when a chargeback result of the operational support system is that a balance is insufficient.

The parameters for the amount should be recharged received by the STB includes: prompt information, ordering fee and the amount should be charged, where:
the prompt information is used to prompt the user whether needs to recharge, the ordering fee is a price after the operational support system synthetically pricing the pay program, and the amount should be recharged is a difference formed by subtracting the balance in the user's account from the price of the pay program ordered by the user.

Embodiments of the present invention are described by taking a pay-per-view program as an example, however, in practical applications, embodiments of the present invention are also applicable to a yearly payment, and in this case, when the balance in the user's account is insufficient to pay for this pay program, the operational support system sends the amount should be recharged to the STB.

In this embodiment, the operational support system synthetically prices the pay program according to a product price of the pay program ordered by the user, a consumption history of the user, a type of a package ordered by the user and a preferential policy of an operator.

In this embodiment, a pay-per-view payment method is adopted, and the amount should be recharged is at least a difference formed by subtracting the balance in the user's account from the price of the pay program ordered by the user.

The redirection unit 43 is configured to send a redirection request to a payment platform after sending a recharging request to the EPG server, where the redirection request carries an HTTP URL provided by the EPG server.

The HTTP URL is saved by the payment platform, and the HTTP URL is an address of an order processing page of the pay program.

A user's service account and a pay program name are sent together with the HTTP URL.

The second receiving unit 44 is configured to receive a redirection response sent by the payment platform after recharging is completed, wherein the redirection response carries the HTTP URL.

The STB redirects to the order processing page of the pay program according to the HTTP URL.

The first obtaining unit 45 is configured to obtain an RTSP URL from the order processing page of the pay program after the operational support system completes chargeback, and requesting a CDN to play the pay program according to the RTSP URL.

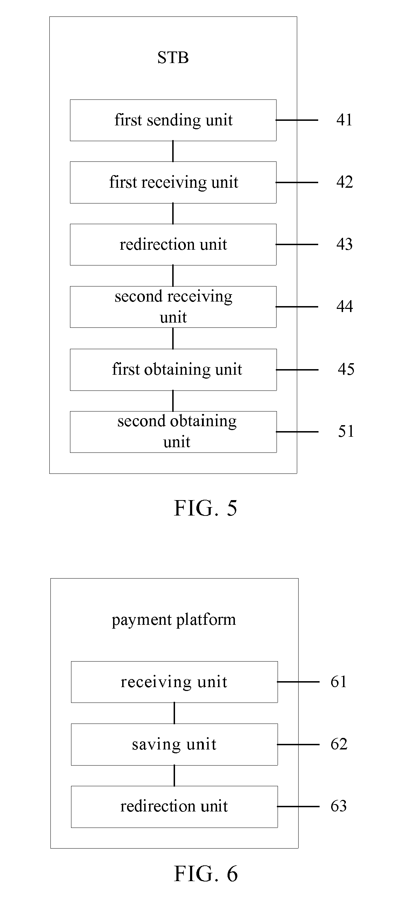

Further, optionally, as shown in FIG. 5, the EPG server further includes a second obtaining unit 51, configured to obtain the chargeback result of the operational support system which is received by the EPG server and sent by the operational support system.

This embodiment further provides a payment platform, as shown in FIG. 6, and the payment platform includes a receiving unit 61, a saving unit 62 and a redirection unit 63, where:
the receiving unit 61 is configured to receive a redirection request sent by a STB, where the redirection request carries an HTTP URL provided by an EPG server, and the HTTP URL is an address of an order processing page of the pay program.

The saving unit 62 is configured to save the received HTTP URL.

The redirection unit 63 is configured to provide the HTTP URL to the STB after recharging is completed, wherein the HTTP URL is carried in a redirection response.

According to the STB provided by embodiments of the present invention, when the user sends a recharging request to the payment platform, the STB sends a redirection request carrying an HTTP URL provided by the EPG server to the payment platform, and the payment platform saves the HTTP URL temporarily. After the operational support system completes the chargeback for the pay program, the payment platform returns the HTTP URL carried in a redirection response to the STB, so that the STB redirects to the order processing page of the pay program according to the HTTP URL and obtains the RTSP URL which is used for playing the pay program from the page. Therefore, the problem in the prior art that the operational support system further requires the user to order the pay program again after completing the chargeback for the pay program is avoided, thereby saving the user's operating steps and enabling the user to order the pay program more conveniently.

Furthermore, according to the STB provided by embodiments of the present invention, when pricing the pay program, the pay program is priced synthetically according to the product price of the pay program, the consumption history of the user, the type of the package ordered by the user and the preferential policy of the operator, therefore, compared to pricing the pay program only depending on the product price of the pay program in the prior art, the refined operation of the product is realized.

### Embodiment 5

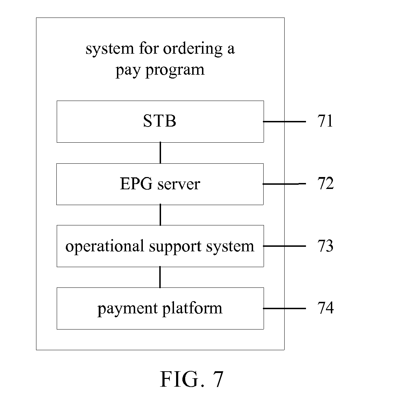

This embodiment of the present invention provides a system for ordering a pay program, as shown in FIG. 7, the system includes an STB 71, an EPG server 72, an operational support system 73 and a payment platform 74, where:
the STB 71 is configured to send an order request to the EPG server 72, so that the EPG server 72 sends a chargeback request to the operational support system 73 according to the order request, receive an amount should be recharged sent by the EPG server 72 when payment chargeback result of the operational support system 73 is that a balance is insufficient, send a redirection request to the payment platform 74 after sending a recharging request to the EPG server 72, where, the redirection request carries an HTTP URL provided by the EPG server 72, the HTTP URL is saved by the payment platform 74, and the HTTP URL is an address of an order processing page of the pay program, receive a redirection response sent by the payment platform 74 after recharging is completed, where the redirection response carries the HTTP URL, and redirect to the order processing page of the pay program according to the HTTP URL, and obtain an RTSP URL from the order processing page of the pay program after the operational support system 73 completes chargeback, and request a CDN to play the pay program according to the RTSP URL.

The EPG server 72 is configured to receive the order request sent by the STB 71, send a chargeback request to the operational support system 73 according to the order request, send the amount should be recharged to the STB 71 when the chargeback result of the operational support system 73 is that the balance is insufficient, receive the recharging request sent by the STB 71, and provide the HTTP URL to the STB 71 when the STB 71 sends the redirection response to the payment platform 74.

The operational support system 73 is configured to receive the chargeback request from the EPG server 72, synthetically price the pay program according to the chargeback request, perform a chargeback process on the basis of a price determined by the synthetic pricing, obtain the chargeback result, and send the chargeback result to the EPG server 72 to perform the chargeback for the pay program.

The payment platform 74 is configured to receive the redirection request sent by the STB 71, where the redirection request carries the HTTP URL provided by the EPG server 72, and the HTTP URL is the address of the order processing page of the pay program, save the HTTP URL, and provide the HTTP URL to the STB 71 after recharging is completed, where the HTTP URL is carried in the redirection response.

According to the system for ordering a pay program provided by embodiments of the present invention, when the user sends a recharging request to the payment platform, the STB sends a redirection request carrying an HTTP URL provided by the EPG server to the payment platform, and the payment platform saves the HTTP URL temporarily. After the operational support system completes the chargeback for the pay program, the payment platform returns the HTTP URL carried in a redirection response to the STB, so that the STB redirects to the order processing page of the pay program according to the HTTP URL and obtains the RTSP URL which is used for playing the pay program from the page. Therefore, the problem in the prior art that the operational support system further requires the user to order the pay program again after completing the chargeback for the pay program is avoided, thereby saving the user's operating steps and enabling the user to order the pay program more conveniently.

Furthermore, according to the system for ordering a pay program provided by embodiments of the present invention, when pricing the pay program, the pay program is priced synthetically according to the product price of the pay program, the consumption history of the user, the type of the package ordered by the user and the preferential policy of the operator, therefore, compared to pricing the pay program only depending on the product price of the pay program in the prior art, the refined operation of the product is realized

Through the above description of the embodiments, it is apparent to persons skilled in the art that the present invention may be implemented through software on a necessary universal hardware, and definitely may also be implemented through hardware, and in many cases, the former is more preferred. Based on this understanding, the technical solution of the present invention is substantially or the parts contributing to the prior art may be provided in the form of a software product. The computer software product is stored in a readable storage medium, such as a floppy disk of the computer, a hard disk, or an optical disk, and includes several instructions for enabling a computer device (for example, a personal computer, a server, or a network device, and so on) to execute the method according to each embodiment of the present invention.

The above descriptions are merely preferred embodiments of the present invention, but not intended to limit the protection scope of the present invention. Any modifications, variations or replacement that can be easily derived by persons skilled in the art without departing from the principle of the present invention shall fall within the protection scope of the present invention. Therefore, the protection scope of the present invention is subject to the appended claims.

## Claims

1. A method for ordering a pay program, comprising:
sending an order request to an electronic program guide, EPG, server, so that the EPG server sends a chargeback request to an operational support system according to the order request;
receiving an amount should be recharged sent by the EPG server when a chargeback result of the operational support system is that a balance is insufficient;
sending a redirection request to a payment platform after sending a recharging request to the EPG server, wherein, the redirection request carries a hypertext transfer protocol uniform resource locator, HTTP URL, provided by the EPG server, the HTTP URL is saved by the payment platform, and the HTTP URL is an address of an order processing page of the pay program;
receiving a redirection response sent by the payment platform after recharging is completed, wherein the redirection response carries the HTTP URL, and redirecting to the order processing page of the pay program according to the HTTP URL; and
obtaining a real time streaming protocol uniform resource locator, RTSP URL, from the order processing page of the pay program after the operational support system completes chargeback, and requesting a content delivery network, CDN, to play the pay program according to the RTSP URL.

2. The method for ordering the pay program according to claim 1, after the EPG server sends the chargeback request to the operational support system according to the order request, further comprising:
obtaining the chargeback result of the operational support system which is received by the EPG server and sent by the operational support system, wherein the operational support system synthetically prices the pay program according to the chargeback request, performs a chargeback process on the basis of a price determined by the synthetic pricing, and obtains the chargeback result.

3. The method for ordering the pay program according to claim 2, wherein the operational support system synthetically prices the pay program according to the chargeback request comprises:
synthetically prices the pay program according to a product price of the pay program, a consumption history of a user, a type of a package ordered by the user and a preferential policy of an operator.

4. The method for ordering the pay program according to claim 1, wherein the amount should be recharged is at least an amount should be paid for playing the pay program.

5. The method for ordering the pay program according to claim 1, wherein before receiving the redirection response sent by the payment platform, further comprising:
judging, by the payment platform, whether a user's payment is successful;
judging, by the payment platform, that the user's payment is successful when an operator receives a transfer from a banking system, and recharging, by the payment platform, the user's payment to a user's account in the operational support system;
judging, by the payment platform, that the user's payment is failed when the operator doesn't receive the transfer from the banking system.

6. The method for ordering the pay program according to claim 5, after the recharging, by the payment platform, the user's payment to the user's account in the operational support system, further comprising:
performing, by the operational support system, the chargeback on the user's account;
wherein an amount of the chargeback is an amount should be paid for playing the pay program.

7. A method for ordering a pay program, comprising:
receiving a redirection request sent by a user terminal, wherein the redirection request carries an HTTP URL provided by an EPG server, and the HTTP URL is an address of an order processing page of the pay program;
saving the HTTP URL;
providing the HTTP URL to the user terminal after recharging is completed, wherein the HTTP URL is carried in a redirection response.

8. A user terminal, comprising:
a first sending unit, configured to send an order request to an EPG server, so that the EPG server sends a chargeback request to an operational support system according to the order request;
a first receiving unit, configured to receive an amount should be recharged sent by the EPG server when a chargeback result of the operational support system is that a balance is insufficient;
a redirection unit, configured to send a redirection request to a payment platform after sending a recharging request to the EPG server, wherein, the redirection request carries an HTTP URL provided by the EPG server, the HTTP URL is saved by the payment platform, and the HTTP URL is an address of an order processing page of the pay program;
a second receiving unit, configured to receive a redirection response sent by the payment platform after recharging is completed, wherein the redirection response carries the HTTP URL, and redirect to the order processing page of the pay program according to the HTTP URL;
a first obtaining unit, configured to obtain an RTSP URL from the order processing page of the pay program after the operational support system completes chargeback, and requesting a CDN to play the pay program according to the RTSP URL.

9. The user terminal according to claim 8, further comprising:
a second obtaining unit, configured to obtain the chargeback result of the operational support system which is received by the EPG server and sent by the operational support system, wherein the operational support system synthetically prices the pay program according to the chargeback request, performs a chargeback process on the basis of a price determined by the synthetic pricing, and obtains the chargeback result;
wherein the operational support system synthetically prices the pay program according to a product price of the pay program, a consumption history of a user, a type of a package ordered by the user and a preferential policy of an operator.

10. A payment platform, comprising:
a receiving unit, configured to receive a redirection request sent by a user terminal, wherein the redirection request carries an HTTP URL provided by an EPG server, and the HTTP URL is an address of an order processing page of the pay program;
a saving unit, configured to save the HTTP URL;
a redirection unit, configured to provide the HTTP URL to the user terminal after recharging is completed, wherein the HTTP URL is carried in a redirection response.

11. A system for ordering a pay program, comprising: a user terminal, an EPG server, a payment platform and an operational support system, wherein:
the user terminal is configured to send an order request to the EPG server, so that the EPG server sends a chargeback request to the operational support system according to the order request, receive an amount should be recharged sent by the EPG server when a chargeback result of the operational support system is that a balance is insufficient, send a redirection request to the payment platform after sending a recharging request to the EPG server, wherein, the redirection request carries an HTTP URL provided by the EPG server, the HTTP URL is saved by the payment platform, and the HTTP URL is an address of an order processing page of the pay program, receive a redirection response sent by the payment platform after recharging is completed, wherein the redirection response carries the HTTP URL, and redirect to the order processing page of the pay program according to the HTTP URL, and obtain an RTSP URL from the order processing page of the pay program after the operational support system completes chargeback, and request a CDN to play the pay program according to the RTSP URL;
the EPG server is configured to receive the order request sent by the user terminal, send a chargeback request to the operational support system according to the order request, send the amount should be recharged to the user terminal when the chargeback result of the operational support system is that the balance is insufficient, receive the recharging request sent by the user terminal, and provide the HTTP URL to the user terminal when the user terminal sends the redirection response to the payment platform;
the payment platform is configured to receive the redirection request sent by the user terminal, wherein the redirection request carries the HTTP URL provided by the EPG server, and the HTTP URL is the address of the order processing page of the pay program, save the HTTP URL, and provide the HTTP URL to the user terminal after recharging is completed, wherein the HTTP URL is carried in the redirection response;
the operational support system is configured to receive the chargeback request from the EPG server, synthetically price the pay program according to the chargeback request, perform a chargeback process on the basis of a price determined by the synthetic pricing, obtain the chargeback result, and send the chargeback result to the EPG server to perform the chargeback for the pay program.
